# EUROPEAN PATENT APPLICATION

(11) **EP 3 291 418 A1**
(43) Date of publication of application: **07.03.2018**
(21) Application number: 17184841.9
(22) Date of filing: 04.08.2017
(51) Int. Cl.: H02K 3/40, H02K 3/34

(54) **ELECTRIC ROTATING MACHINE**

(30) Priority: 29.08.2016 JP 2016166471
(71) Applicant: Hitachi, Ltd., Tokyo 100-8280 (JP)
(72) Inventor: SATOU, Daisuke, Tokyo, 100-8280 (JP); KOJIMA, Hiroaki, Tokyo, 100-8280 (JP); YOSHITAKE, Yuichirou, Tokyo, 100-8280 (JP); KASAI, Yuuki, Tokyo, 100-8280 (JP)
(74) Representative: MERH-IP Matias Erny Reichl Hoffmann Patentanwälte PartG mbB

(57) **Abstract**

By a simple configuration, deterioration and burnout of at least a slot liner 10, protruding toward a coil end from a stator core end portion 1A (axial direction), and a corona shield layer 2 are prevented. In order to address the forgoing problem, an electric rotatingmachine 20 according to the present invention includes a rotor 22 and a stator 21 disposed opposite to the rotor 22 through a predetermined interval from the rotor 22 on an outer diameter side of the rotor 22; the stator 21 including a stator core 1 formed by laminating a plurality of thin steel sheets in the axial direction, a plurality of slots 7 formed on an inner diameter side of the stator core 1, the plurality of slots 7 extending in the axial direction and circumferentially spaced at a predetermined interval, and a stator coil 5 mounted in the plurality of slots 7; and the stator coil 5 including a coil conductor 4, a main electrically insulating layer formed on a surface of the coil conductor 4, a corona shield layer 2 provided on a surface of the main electrically insulating layer, and a slot liner 10 covering an outer periphery of the corona shield layer 2; in which at least a coil end portion of the slot liner 10 that protrudes in the axial direction from a stator core end portion 1A is not formed with electrically conductive paths between top/reverse sides thereof for allowing a charging current to flow between top and reverse sides of the slot liner 10.

## Description

### FIELD OF THE INVENTION

The present invention relates to an electric rotating machine and, for example, to an electric rotating machine suitable for being variable-speed operated at a voltage having a high frequency component.

### BACKGROUND OF THE INVENTION

In recent years, an electric rotating machine that is variable-speed operated is operated at a voltage having a high frequency component by an inverter, in order to improve operation efficiency.

A stator coil in the above-mentioned electric rotating machine, that is variable-speed operated, is mounted through an electrically conductive slot liner in a plurality of slots formed in a stator core, and is fixed by a wedge, as described in Japanese Patent Laid-Open No.2012-115113 (Patent Literature 1).

### SUMMARY OF THE INVENTION

In the stator coil of the electric rotating machine described in the above-mentioned patent literature 1, charging current relaxing means is provided between a slot liner and a corona shield layer that protrude toward a coil end from a stator core end portion (axial direction), whereby a charging current in portions of the slot liner and corona shield layer that protrude toward the coil end from the stator core end portion is relaxed, thus suppressing generation of electric discharge in a gap created by warpage and waviness of the slot liner which will occur due to manufacture conditions, and preventing deterioration and burnout of the slot liner and corona shield layer which protrude toward the coil end from the stator core end portion.

However, if a charging current relaxing layer is installed, as the charging current relaxing means, between the slot liner and the corona shield layer which protrude toward the coil end from the stator core end portion, the charging current relaxing layer becomes a level difference in a stator core interior, thereby creating a gap between the slot liner and the corona shield layer.

If the gap is created between the slot liner and the corona shield layer, electric discharge is produced in the created gap, so that the deterioration and burnout of the slot liner and corona shield layer in the stator core interior has been concerned about.

Moreover, in the recent years, realization of high voltage of and low loss of an electric rotating machine according to realization of high breakdown voltage of and high speed operation-switching of a switching device for a high frequency power supply is being promoted, a surge voltage is superimposed on input voltage of the electric rotating machine by an increase in the steepness of a power supply voltage and electric discharge becomes easily generated, and it is also concerned that the electric discharge will lead to the deterioration and burnout of the slot liner and corona shield layer.

The present invention has been made in view of the foregoing problems, and an object of the present invention is to provide an electric rotating machine in which deterioration and burnout of at least a slot liner and corona shield layer which protrude toward a coil end from a stator core end portion (axial direction) can be prevented by simple means.

In order to address the foregoing object, according to one aspect of the present invention there is provided an electric rotating machine which includes a rotor and a stator disposed opposite to the rotor through a predetermined interval from the rotor on an outer diameter side of the rotor; the stator including a stator core configured by laminating a plurality of thin steel sheets in an axial direction, a plurality of slots formed on an inner diameter side of the stator core, the plurality of slots extending in the axial direction and circumferentially spaced at a predetermined interval, and a stator coil mounted in the plurality of slots; and the stator coil being composed of a coil conductor, amain electrically insulating layer formed on a surface of the coil conductor, a corona shield layer provided on a surface of the main electrically insulating layer, and/or a slot liner covering an outer periphery of the corona shield layer; in which at least a coil end portion of the slot liner that protrudes in the axial direction from a stator core end portion is not formed with electrically conductive paths between top/reverse sides thereof for allowing a charging current to flow between the top and reverse sides.

According to the present invention, by the simple means, it is possible to prevent the deterioration and burnout of at least the slot liner and corona shield layer which protrude from the coil end from the stator core end portion (axial direction).

### BRIEF DESCRIPTION OF DRAWINGS

Fig. 1 is a schematic view showing an entire configuration of an electric rotating machine according to the present invention;
Fig. 2 is a partial sectional view showing a schematic configuration of a portion of a stator coil in the vicinity of an end portion of a stator core in a first embodiment of the electric rotating machine according to the present invention;
Fig. 3A is a view showing a schematic configuration of a portion of a slot liner in the vicinity of the end portion of the stator core in the first embodiment of the electric rotating machine according to the present invention;
Fig. 3B is a sectional view taken along a line A-A in Fig. 3A;
Fig. 4A is a view showing a schematic configuration of a portion of a slot liner in the vicinity of an end portion of a stator core in a second embodiment of the electric rotating machine according to the present invention;
Fig. 4B is a sectional view taken along a line A-A in Fig. 4A;
Fig. 5A is a view that shows a schematic configuration of a portion of a slot liner in the vicinity of an end portion of a stator core in a third embodiment of the electric rotating machine according to the present invention;
Fig. 5B is a sectional view taken along a line A-A in Fig. 5A;
Fig. 6 is a partial sectional view showing a stator coil in a stator core interior in a fourth embodiment of the electric rotating machine according to the present invention;
Fig. 7A is a view showing a schematic configuration of a portion of a slot liner in the vicinity of an end portion of the stator core in the fourth embodiment of the electric rotating machine according to the present invention;
Fig. 7B is a sectional view taken along a line A-A in Fig. 7A;
Fig. 8 is a partial sectional view showing a schematic configuration of a portion of a stator coil in the vicinity of an end portion of a stator core in a fifth embodiment of the electric rotating machine according to the present invention;
Fig. 9A is a view showing a schematic configuration of a portion of a slot liner, that is mounted on a stator core side and in the vicinity of an end portion of a stator core in a sixth embodiment of the electric rotating machine according to the present invention;
Fig. 9B is a view showing a schematic configuration of a portion of a slot liner, that is mounted on a corona shield layer side and in the vicinity of the end portion of the stator core in the sixth embodiment of the electric rotating machine; and
Fig. 9C is a sectional view taken along a line A-A in Fig. 9A and a line B-B in Fig. 9B.

### DETAILED DESCRIPTION OF THE PREFERRED EMBODIMENTS

An electric rotating machine of the present invention will be explained hereinafter on the basis of illustrated embodiments. Incidentally, in respective embodiments, identical reference signs are used for identical components.

### [FIRST EMBODIMENT]

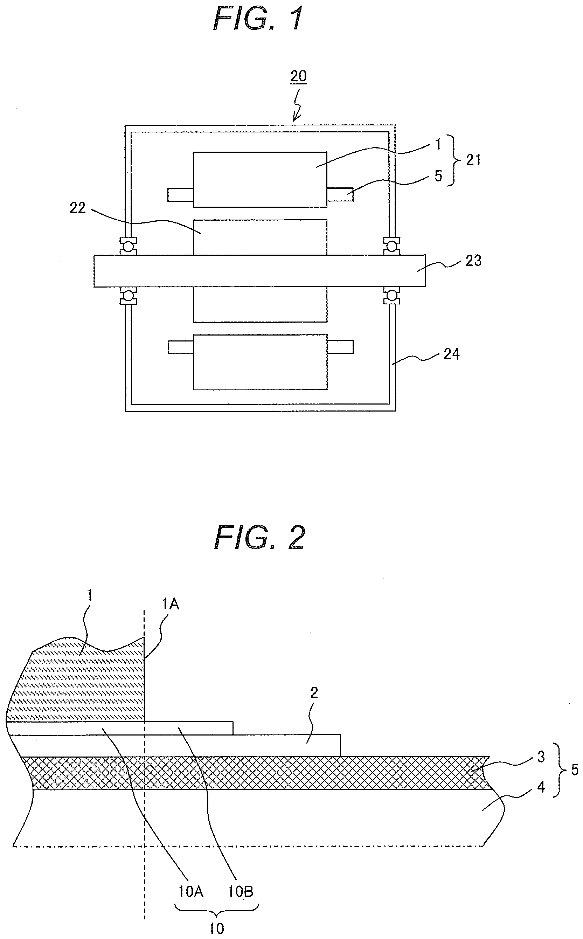

In Fig. 1, there is shown an entire configuration of an electric rotating machine of the present invention.

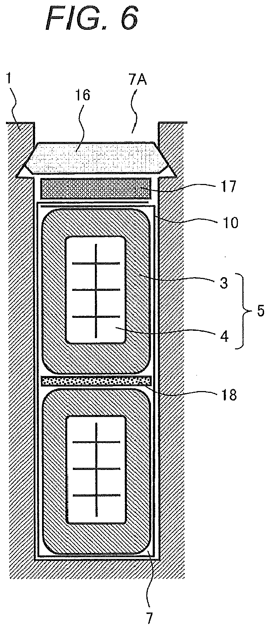

As shown in this Figure, the electric rotating machine 20 of this embodiment includes a cage-type rotor 22 supported by a rotating shaft 23, and a stator 21 disposed opposite to the rotor 22 through a predetermined interval from the rotor 22 on an outer diameter side of the rotor 22. The stator 21 is schematically composed of a stator core 1 formed by laminating a plurality of thin steel sheets in an axial direction, and a three-phase stator coil 5 which is wound in two layers and mounted in a plurality of slots 7 (refer to Fig. 6) which, on an inner diameter side of the stator core 1, extend in the axial direction and are formed at a predetermined interval in a circumferential direction.

The stator coil 5, as shown in Fig. 2, is composed of a coil conductor 4, a main electrically insulating layer 3 formed on a surface of the coil conductor 4, a corona shield layer 2 provided on a surface of the main electrically insulating layer 3, and a slot liner 10 covering an outer periphery of the corona shield layer 2.

Namely, as shown in Fig. 2, the stator coil 5 includes the coil conductor 4, and the main electrically insulating layer 3 formed on the surface of the coil conductor 4. An outer periphery of the main electrically insulating layer 3 of the stator coil 5 that is mounted in the interior of the stator core 1 is covered with the semi-conductive corona shield layer 2 in order to prevent electric discharge between the stator core 1 and the stator coil 5. The outer periphery of the corona shield layer 2 is covered with the slot liner 10, having resistance equal to or less than that of the corona shield layer 2, and mounted in the slots 7 of the stator core 1.

Moreover, at a coil end portion of the stator coil 5 which protrudes toward a coil end from a stator core end portion 1A (axial direction), a creeping electric discharge may be generated due to electric field concentration at an end portion protruding toward the coil end from the stator core end portion 1A, thereby involving a risk of the deterioration of the corona shield layer 2 and main electrically insulating layer 3. Therefore, the end portion of the corona shield layer 2 is covered with a high-resistant corona shield layer in a direction away from the stator core 1.

The stator coil 5 that is configured as described above is connected to a high frequency power source and the electric rotating machine 20 is driven.

Incidentally, the three-phase stator coil 5 is electrically arranged at an interval of 120 degrees between its respective layers. Moreover, the rotor 22 is not limited to the cage-type rotor described above and may be a permanent magnet-type rotor or a wound-type rotor.

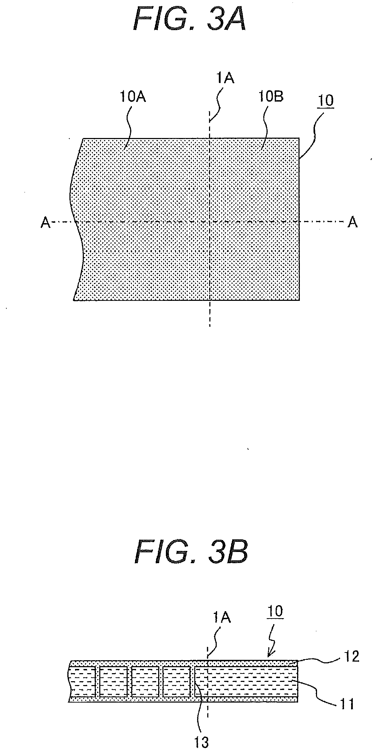

Fig. 3A is a view showing a schematic configuration of a portion of a slot liner in the vicinity of the end portion of the stator core in the first embodiment of the electric rotating machine according to the present invention. Fig. 3B is a sectional view taken along a line A-A in Fig. 3A.

As shown in Fig. 3B, the slot liner 10 includes an electrically insulating substrate 11 made of electrically insulating paper which comprises, for example, aramid fibers, and an electrically conductive material 12 made of, for example, an electrically conductive resin containing carbon, through which current that charges the main electrically insulating layer 3 of the stator coil 5 at the time of driving of the electric rotating machine 20 passes.

In the present embodiment, while a slot liner 10A of the slot liner 10 that is mounted in an interior of the stator core 1 is formed with electrically conductive paths 13 between top/reverse sides thereof for allowing a charging current to flow between the top and reverse surfaces of the slot liner 10A, a slot liner 10B of the coil end portion of the slot liner 10 that protrudes toward the coil end from the stator core end 1A (axial direction) has a structure without electrically conductive paths 13 between top/reverse sides thereof that have been described above. Incidentally, the electrically conductive paths 13 between the top/reverse sides of the slot liner 10A are created by electric conduction between the top/reverse sides of the slot liner 10A through the electrically conductive material 12.

Moreover, a portion that is not formed with the above-mentioned electrically conductive paths 13 between the top/reverse sides of the slot liner 10A may exist in the slot liner 10A mounted in the interior of the stator core 1.

By employing the above-mentioned configuration of the present embodiment, even if warpage and undulation are generated at the slot liner 10B of the coil end portion which protrudes toward the coil end from the stator core end portion 1A, deterioration and burnout of the slot liner 10B of the coil end portion and corona shield 2, which protrude toward the coil end from the stator core end portion 1A, can be prevented, since the slot liner 10B of the coil end portion is not formed with the electrically conductive paths 13 between the top/reverse sides thereof, thus reducing a charging current that flows the stator coil 5 at the coil end portion protruding toward the coil end from the stator core end portion 1A.

Moreover, gaps are not created between the slot liner 10A and the corona shield layer 2, that are mounted in the interior of the stator core 1, and between the slot liner 10 and the stator core 1 (since the charging current relaxing layer such as in the prior art is not provided), so that any gap between the slot liner 10A and the corona shield layer 2 that are mounted in the interior of the stator core 1 are not produced due to the charging current relaxing layer, electric discharge that is generated between the slot liner 10A and the corona shield layer 2 is suppressed, and the deterioration and burnout of the slot liner 10A and corona shield layer 2 that are mounted in the interior of the stator core 1 can be prevented.

Therefore, according to the present embodiment, it is possible to obtain the electric rotating machine 20 in which, even if a voltage having a high frequency component is input to the electric rotating machine 20, the deterioration and burnout of at least the slot liner 10B of the coil end portion and corona shield layer 2, which protrude toward the coil end from the stator core end portion 1A (axial direction), can be prevented by the simple means.

### [SECOND EMBODIMENT]

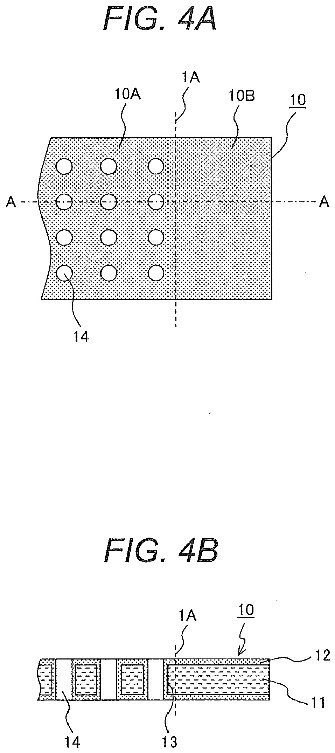

Fig. 4A is a view showing a schematic configuration of a portion of a slot liner in the vicinity of an end portion of a stator core in a second embodiment of the electric rotating machine according to the present invention. Fig. 4B is a sectional view taken along a line A-A in Fig. 4A;

The slot liner 10 of the present embodiment that is shown in these Figures is configured in substantially the same manner as the slot liner 10 of the first embodiment that has been described above with reference to Figs. 3A and 3B, but is different from the slot liner of the fist embodiment in that through-holes 14 are formed in the substrate 11 of the slot liner 10A mounted in the interior of the stator core 1, and electric conducive paths 13 between top/reverse sides of the slot liner 10A through which charging current flows between the top/reverse sides of the slot liner 10A are formed in inner walls of the through-holes 14.

For example, by forming the through-holes 14 in the substrate 11 by press working and, thereafter, applying the electrically conductive material 12 onto inner surfaces of the through-holes 14, the above-mentioned electrically conductive paths 13 between the top/reverse sides of the slot liner 10A are formed in the slot liner 10A mounted in the interior of the stator core 1. Moreover, the shape of the through-hole 14 is not limited to a circular shape and may be an elliptic shape, a quadrangle shape, or the like.

By employing the above-mentioned configuration of the present embodiment, the same effects as in the first embodiment can, of course, be obtained and, through the through-holes 14, varnish becomes easy to impregnate the slot liner 10A mounted in the interior of the stator core 1, and thus no gaps are produced between the slot liner 10 and the corona shield layer 2 and between the stator core 1 and the slot liner 10, so that electric discharge is suppressed, and the deterioration and burnout of the slot liner 10 and corona shield layer 2 can be prevented.

### [THIRD EMBODIMENT]

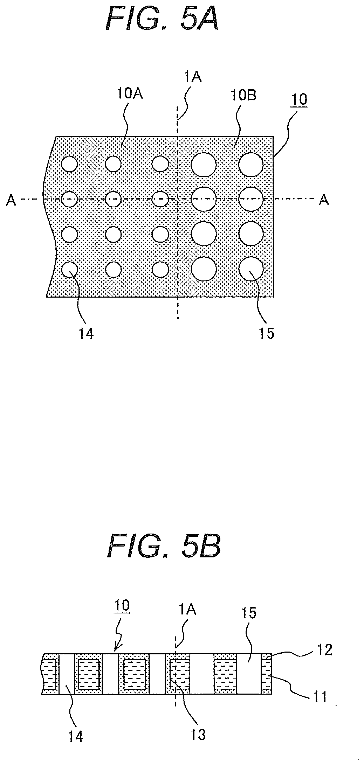

Fig. 5A is a view that shows a schematic configuration of a portion of a slot liner in the vicinity of an end portion of a stator core in a third embodiment of the electric rotating machine according to the present invention. Fig. 5B is a sectional view taken along a line A-A in Fig. 5A.

The slot liner 10 of the present embodiment that is shown in these Figures is configured in substantially the same manner as the slot liner 10 of the second embodiment that has been described above with reference to Figs. 4A and 4B, but is different from the slot liner 10 of the second embodiment in that electrically conductive material removed holes 15 are formed in a slot liner 10B of a coil end portion of a slot liner 10 that protrudes toward a coil end from the stator core end portion 1A.

In the present embodiment, the electrically conductive material removed holes 15 are formed by causing a substrate 11 to be subjected to press working to form through-holes 14 in the entire slot liner 10, thereafter applying an electrically conductive material 12 onto inner surfaces of the through-holes 14, and causing portions of the through-holes 14 in a slot liner 10B of a coil end portion of the slot liner 10, which protrudes toward a coil end from a stator core end portion 1A, to be subj ected to press working to thereby remove the electrically conductive material 12. Moreover, the shape of the electrically conductive material removed hole 15 is not limited to a circular shape and may be an elliptic shape, a quadrangle shape, or the like.

By employing the above-mentioned configuration of the present embodiment, the same effects as in the second embodiment can, of course, be obtained and, even if there are plural kinds of sizes of the stator coils 5, by performing an additional working for forming electrically conductive material removed holes 15 in the slot liner 10B of the coil end portion, the slot liner 10B of the coil end portion which protrudes toward the coil end from the stator core end portion 1A can be configured to have a structure without electrically conductive paths 13 between the top/reverse sides of the slot liner 10B and, at the time of manufacturing the electric rotating machine 20, the slot liner 10 can be communalized.

### [FORTH EMBODIMENT]

In Fig. 6, there is shown a stator coil 5 in an interior of a stator core 1 in a fourth embodiment of the electric rotating machine of the present invention.

As shown in this Figure, two stator coils 5, which are covered at outer peripheries thereof with a slot liner 10, and an insulating member 18, which is installed between the two stator coils 5, are typically mounted in a slot 7 of the stator core 1. In order to prevent dropout of the stator coils 5, a slot opening portion 7A of the slot 7 is sealed, through a spacer 17, by a wedge 16 which is made of insulating material.

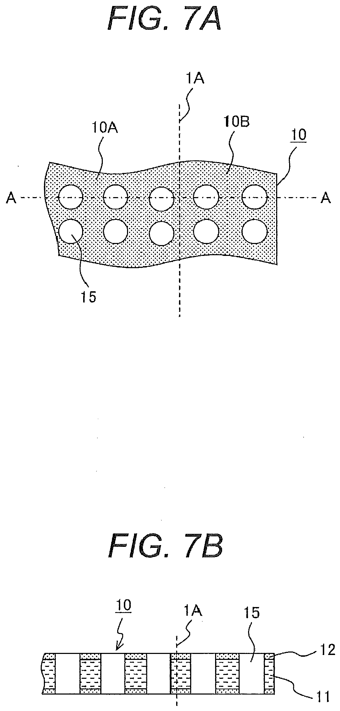

Fig. 7A is a view showing a schematic configuration of a portion of a slot liner in the vicinity of an end portion of the stator core in the fourth embodiment of the electric rotating machine according to the present invention. Fig. 7B is a sectional view taken along a line A-A in Fig. 7A.

The slot liner 10 of the present embodiment which is shown in these Figures is configured in substantially the same manner as the slot liner 10 of the third embodiment that has been described above with reference to Figs. 5A and 5B, but is different from the slot liner 10 of the third embodiment in that electrically conductive material removed holes 15 are also formed on a wedge 16 side (an interior of the stator core 1) of a slot liner 10A of the slot liner 10 which is mounted in the interior of the stator core 1.

Similarly to the electrically conductive material removed holes 15 formed in the slot liner 10B of the coil end portion which protrudes toward the coil end from the stator core end portion 1A in the third embodiment, the electrically conductive material removed holes 15 on the wedge 16 side of the slot liner 10A mounted in the interior of the stator core 1 in the fourth embodiment are formed by causing a substrate 11 of the slot liner 10 to be subjected to press working to thereby form through-holes 14 in the entire slot liner 10, thereafter applying electrically conductive material 12 onto inner surfaces of the through-holes 14, and causing portions of the through-holes 14 of the slot liner 10A of the slot liner, which is mounted in the interior of the stator core 1, to be subjected to press working to remove the conductive material 12.

Moreover, the shape of the electrically conductive material removed hole 15 of the slot liner 10A mounted in the interior of the stator core 1 is not limited to a circular shape and may be an elliptic shape, a quadrangle shape, or the like.

By employing the above-mentioned configuration of the present embodiment, the same effects as in the third embodiment can, of course, be obtained, the slot liner 10A on the wedge 16 side, in which deterioration and burnout are likely to occur since the wedge 16 is made of the insulating material and thus heat hardly escapes, can be configured to locally have no electrically conductive paths 13 between the top/reverse sides thereof, and the deterioration and burnout of the slot liner 10A and corona shield layer 2 on the wedge 16 side in the stator core 1 can be prevented.

### [FIFTH EMBODIMENT]

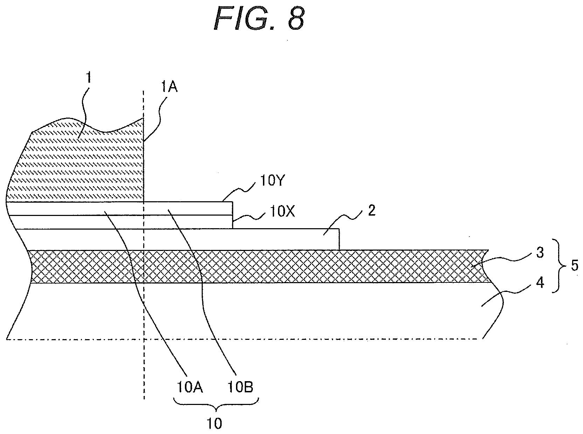

Fig. 8 shows a schematic configuration of a portion of a stator coil 5 in the vicinity of an end portion of a stator core 1 in a fifth embodiment of the electric rotating machine of the present invention.

The slot liner 10 shown in this Figure is configured in substantially the same manner as the slot liner 10 of the first embodiment that has been described above with reference to Fig. 2, but is different from the slot liner 10 of the first embodiment in that the slot liner 10 is composed of two slot liners, a slot liner 10X and a slot liner 10Y, and that, for example, in a case where through-holes 14 and electrically conductive material removed holes 15 are formed in the slot liner 10 as in the third embodiment shown in Figs. 5A and 5B, a surface on which the slot liner 10 slides is set on a side of recess portions of the through-hole 14 and electrically conductive material removed hole 15 (a surface side on which "warpage (burr) " that is generated at the time of forming the through-hole 14 and the electrically conductive material removed hole 15 by press working is not present).

By employing the above-mentioned configuration of the present embodiment, the same effects as in the fourth embodiment can, of course, be obtained, the sliding surface of the slot liner 10 is configured to have a structure without burrs which is generated at the time of forming the through-hole 14 and the electrically conductive material removed hole 15, and wear resistance of the stator coil 5 at the time of thermal elongation thereof is improved.

### [SIXTH EMBODIMENT]

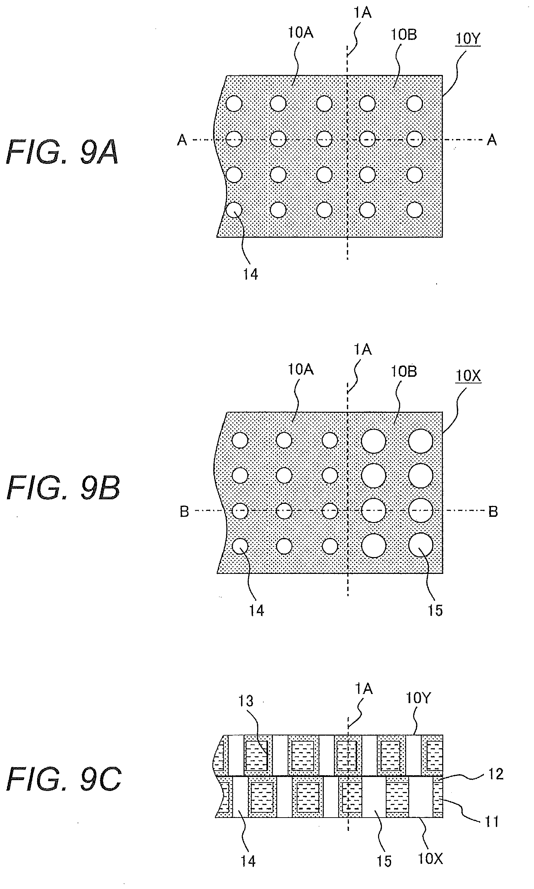

Fig. 9A is a view showing a schematic configuration of a portion of a slot liner, that is mounted on a stator core side and in the vicinity of an end portion of a stator core in a sixth embodiment of the electric rotating machine according to the present invention. Fig. 9B is a view showing a schematic configuration of a portion of a slot liner, that is mounted on a corona shield layer side and in the vicinity of the end portion of the stator core in the sixth embodiment of the electric rotating machine. Fig. 9C is a sectional view taken along a line A-A in Fig. 9A and a line B-B in Fig. 9B.

The slot liner 10 of the present embodiment which is shown in these Figures is composed of two slot liners 10X, 10Y similarly to the fifth embodiment shown in Fig. 8, but is different from the slot liner of the fifth embodiment in that electrically conductive material removed holes 15 are formed in only a slot liner 10B of a coil end portion of one 10X of the two slot liners 10X, 10Y which is contact with a corona shield layer 2 (is mounted on a corona shield layer 2 side) and protrudes toward a coil end from a stator core end portion 1A.

Namely, a slot liner 10A of the slot liner 10Y in the interior of the stator core 1, which is mounted on a stator core 1 side, and a slot liner 10B of the coil end portion are formed with through-holes 14, an electrically conductive material 12 is applied onto inner surfaces of the through-holes 14 to form electrically conductive paths 13 between top/reverse sides of the slot liners 10, while the slot liner 10X which is in contact with the corona shield layer 2 has the same structure as the slot liner 10 of the third embodiment described with reference to Figs. 5A and 5B. In other words, the slot liner 10A mounted in the interior of the stator core 1 is formed with the through-holes 14 and the electrically conductive paths 13 between top-reverse sides thereof, and the slot liner 10B of the coil end portion is formed with the conductive material removed holes 15.

By employing the above-mentioned configuration of the present embodiment, charging current which passes through the corona shield layer 2 protruding toward the coil end from the stator core end portion 1A is reduced, the deterioration and burnout of the slot liner 10B of the coil end portion and corona shield layer 2 which protrude toward the coil end from the stator core end portion 1A can be prevented, and the slot liner 10Y which is not in contact with the corona shield layer 2 is not formed with the electrically conductive material removed holes 15, so that an increase in machining steps can be suppressed.

Incidentally, the present invention is not limited to the above-mentioned embodiments but various modifications can be included in the scope and gist of the present invention and in the present invention as recited in the attached claims and the equivalents thereof. For example, the embodiments are described in detail for easily describing the invention, and the invention is not limited to a structure having all of the described configurations. Moreover, a portion of a configuration of a certain embodiment can be replaced by a configuration of another embodiment, and a configuration of a certain embodiment can be added to a configuration of another embodiment. Moreover, it is possible to add a configuration to a portion of a configuration of each of the embodiments, and to delete a portion of a configuration of the embodiment, and a portion of a configuration of the embodiment can be replaced by another configuration.

### REFERENCE SIGNS LIST

1...Stator core
1A...Stator core end portion
2...Corona shield layer
3...Main electrically insulating layer
4...Coil conductor
5...Stator coil
7...Slot
7A...Slot opening portion
10...Slot liner
10A...Slot liner mounted in an interior of the stator core
10B...Slot liner of coil end portion
10X... Slot liner mounted on a corona shield layer side
10Y...Slot liner mounted on a stator core side
11...Substrate
12...Electrically conductive material
13...Electrically conductive path between top/reverse sides
14...Through-hole
15...Electrically conductive material removed hole
16...Wedge
17...Spacer
18...Insulating member
20...Electric rotating machine
21...Stator
22...Rotor
23...Rotating shaft

## Claims

1. An electric rotating machine comprising: a rotor (22) and a stator (21) disposed opposite to the rotor (22) through a predetermined interval from the rotor (22) on an outer diameter side of the rotor (22);
the stator (21) including a stator core (1) configured by laminating a plurality of thin steel sheets in an axial direction, a plurality of slots (7) formed on an inner diameter side of the stator core (1), the plurality of slots (7) extending in the axial direction and circumferentially spaced at a predetermined interval, and a stator coil (5) mounted in the plurality of slots (7); and
the stator coil (5) being composed of a coil conductor (4), a main electrically insulating layer (3) formed on a surface of the coil conductor (4), a corona shield layer (2) provided on a surface of the main electrically insulating layer (3), and a slot liner (10) covering an outer periphery of the corona shield layer (2),
wherein at least a coil end portion of the slot liner (10) that protrudes in the axial direction from a stator core end portion (1A) is not formed with electrically conductive paths between top/reverse sides of the slot liner (10) for allowing a charging current to flow between the top and reverse sides.

2. The electric rotating machine according to claim 1,
wherein a portion of the slot liner (10A) that is mounted in an interior of the stator core (1) is formed with the electrically conductive paths between top/reverse sides of the slot liner (10).

3. The electric rotating machine according to claim 1,
wherein a portion of the slot liner (10A) that is mounted in the interior of the stator core is not formed with the electrically conductive paths between top/reverse sides of the slot liner (10).

4. The electric rotating machine according to any one of claims 1 to 3,
wherein the slot liner (10) is composed of an electrically insulating substrate, and an electrically conductive material through which current that charges the main electrically insulating layer at the time of driving of the electric rotating machine passes.

5. The electric rotating machine according to claim 2,
wherein the slot liner (10A) that is mounted in the interior of the stator core (1) is formed with through-holes, and the electrically conductive paths between the top/reverse sides of the slot liner (10) are formed in inner surfaces of the through-holes.

6. The electric rotating machine according to claim 5,
wherein the slot liner (10B) of the coil end portion protruding in the axial direction from the stator core end portion (1A) is formed with through-holes in inner surfaces of which the electrically conductive paths are not formed.

7. The electric rotating machine according to claim 5,
wherein the slot liner (10) is composed of an electrically insulating substrate, and an electrically conductive material through which current that charges the main electrically insulating layer of the stator coil (5) at the time of driving of the electric rotating machine passes, and wherein the through-holes (14) are formed in the substrate by press working, and the electrically conductive paths are formed by applying the electrically conductive material onto the inner surfaces of the through-holes (14), and thereby the electrically conductive paths between the top/reverse sides are formed.

8. The electric rotating machine according to claim 6,
wherein the slot liner (10) is composed of an electrically insulating substrate, and an electrically conductive material through which current that charges the main electrically insulating layer of the stator coil (5) at the time of driving of the electric rotating machine passes, and wherein the through-holes (14) are formed in the slot liner (10A) mounted in the interior of the stator core (1) and the slot liner (10B) of the coil end portion protruding in the axial direction from the stator core end portion (1A) by causing the substrate to be subjected to press working, the electrically conductive material is applied onto the inner surfaces of the through-holes (14), and the through-holes (14) which are formed in the slot liner (10B) of the coil end portion protruding in the axial direction from the stator core end portion (1A) are made into electrically conductive material removed holes by causing the through-holes (14) to be subjected to press working to remove the electrically conductive material.

9. The electric rotating machine according to claim 3, including wedges (16) provided in opening portions of the plurality of slots for preventing dropout of the stator coil (5) mounted in the plurality of slots (7),
wherein the slot liner (10) is composed of an electrically insulating substrate, and an electrically conductive material through which current that charges the main electrically insulating layer of the stator coil (5) at the time of driving of the electric rotating machine passes, and wherein through-holes (14) are formed in the slot liner (10A) mounted in the interior of the stator core (1) and the slot liner (10B) of the coil end portion protruding in the axial direction from the stator core end portion by causing the substrate to be subjected to press working, the electrically conductive material is applied onto the inner surfaces of the through-holes (14), and the through-holes (14) which are formed on wedge sides of the slot liner (10A) mounted in the interior of the stator core (1) and in the slot liner (10B) of the coil end portion protruding in the axial direction from the stator core end portion (1A) are made into electrically conductive material removed holes by causing the through-holes (14) to be subjected to press working to remove the electrically conductive material.

10. The electric rotating machine according to claim 8,
wherein two slot liners (10) are mounted in the plurality of slots (7), and a surface on which the slot liner slides is set on a side of recess portions of the through-hole (14) and of the electrically conductive material removed holes (15).

11. The electric rotating machine according to claim 10,
wherein the electrically conductive material removed holes (15) are formed in a slot liner of only a coil end portion of one of the two slot liners which is in contact with the corona shield layer (2) and protrudes in the axial direction from the stator core end portion (1A).

12. The electric rotating machine according to claim 11,
wherein, of the two slot liners, a slot liner (10) of the slot liner mounted on a stator core side and in the interior of the stator core and a slot liner of the coil end portion are formed with the through-holes (14), the electrically conductive material is applied onto inner surfaces of the through-holes (14) to form the electrically conductive paths between the top/reverse sides, the slot liner (10) which is in contact with the corona shield layer (2) and is in the interior of the stator core (1) is formed with through-holes (14), the electrically conductive material is applied onto inner surfaces of the through-holes to the electrically conductive paths between the top/reverse sides, and the electrically conductive material removed holes (15) are formed in the slot liner (10B) of the coil end portion.

13. The electric rotating machine according to any one of claims 5 to 12,
wherein the thorough-holes (14) are any one of circular shapes, elliptic shapes, or quadrangle shapes.

14. The electric rotating machine according to claim 4 or any one of claims 7 to 12,
wherein the substrate (11) is made of electrically insulating paper which comprises aramid fibers, and the electrically conductive material is made of an electrically conductive resin containing carbon.

15. The electric rotating machine according to any one of claims 1 to 14,
wherein the electric rotating machine (20) is adapted to be variable-speed operated at a voltage having a high frequency component.
